Europäisches Patentamt

(19) European Patent Office

Office européen des brevets

(11) Publication number: **0 259 132 B1**

(12) # EUROPEAN PATENT SPECIFICATION

(45) Date of publication of patent specification: **21.11.91**  (51) Int. Cl.⁵: **C03C 4/02**, C03C 4/08, C03C 3/078

(21) Application number: **87307686.3**

(22) Date of filing: **28.08.87**

The file contains technical information submitted after the application was filed and not included in this specification

(54) **Glasses for containers; processes for the production of same; and containers comprising said glasses.**

(30) Priority: **05.09.86 JP 208045/86**

(43) Date of publication of application:
**09.03.88 Bulletin 88/10**

(45) Publication of the grant of the patent:
**21.11.91 Bulletin 91/47**

(84) Designated Contracting States:
**DE FR GB**

(56) References cited:
**DE-B- 1 421 911**
**US-A- 4 312 953**

(73) Proprietor: **YAMAMURA GLASS CO. LTD.**
**2-21, Hamamatsubaracho**
**Nishinomiya-shi Hyogo-ken(JP)**

Proprietor: **KIRIN BEER KABUSHIKI KAISHA**
**26-1 Jingumae 6-chome**
**Shibuya-ku Tokyo-To(JP)**

(72) Inventor: **Abe, Yoshihiro**
**3-7-59-505, Takakuradai Suma-ku**
**Kobe-shi Hyogo-ken(JP)**
Inventor: **Kitayama, Masao**
**1-26-22, Nishioike Kita-ku**
**Kobe-shi Hyogo-ken(JP)**
Inventor: **Minoura, Naoya/Meson Miyama 2-13**
**2065-8 Ouzenji Asou-ku**
**Kawasaki-shi Kanagawa-ken(JP)**
Inventor: **Noguchi, Akira**
**Gosanjo Shataku 307 535, Gosanjo-cho**
**Hikone-shi Shiga-ken(JP)**

(74) Representative: **Baverstock, Michael George Douglas et al**
**BOULT, WADE & TENNANT 27 Furnival Street**
**London, EC4A 1PQ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to green glasses of soda-lime-silica type for containers, capable of absorbing or intercepting ultraviolet rays and near ultraviolet visible rays, and more particularly, it is concerned with green glass compositions for beer bottles, capable of protecting beer from so-called sunflavour.

It is known that beer is deteriorated by the action of sunlight so that it gives out the so-called 'sunflavor'. In particular, light within a wavelength range of 400 to 460 nm reacts with bitter substances of hops so that the beer loses its intrinsic amber colour and becomes red-tinted, and gives out a shunky odour, namely sunflavour.

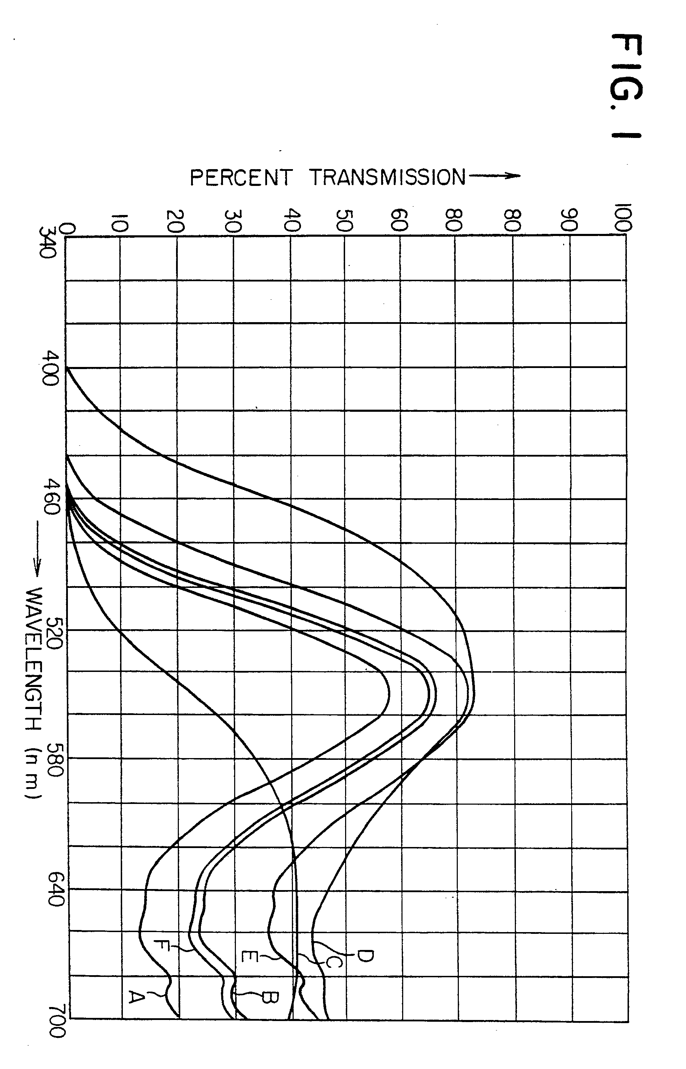

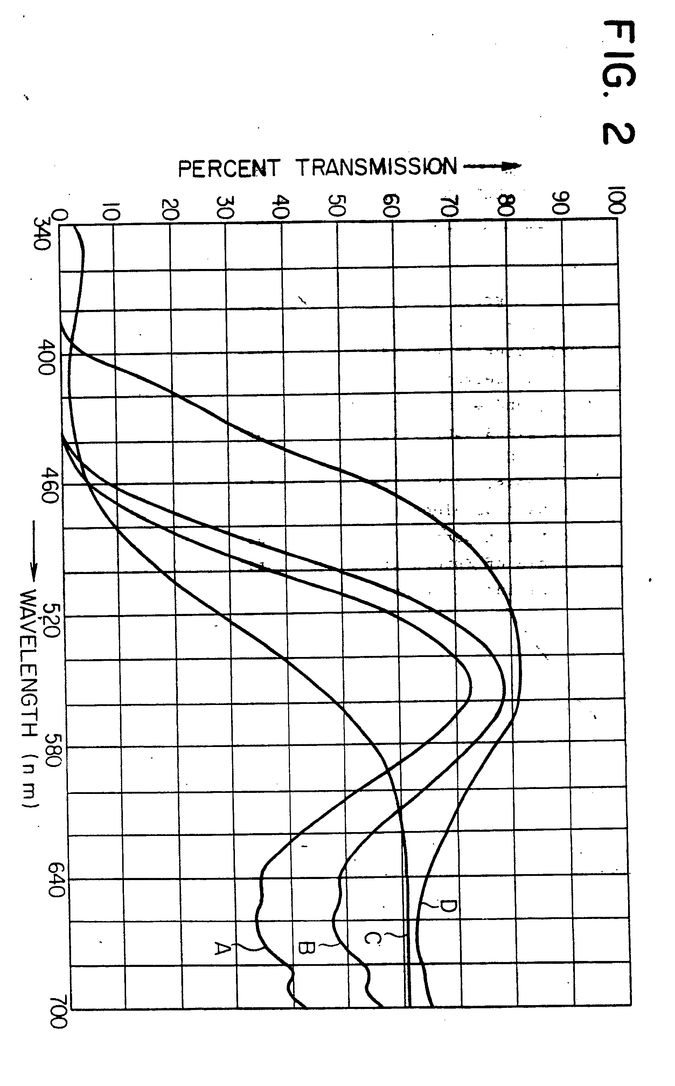

A beer bottle formed of ordinary amber glass (thickness: about 4 mm, shown in Fig. 1 and Fig. 2, Curve C) intercepts light of 400 to 460 nm, but another beer bottle of ordinary green glass does not have properties comparable to those of the amber glass, as shown in Fig. 1, although various efforts have been made to intercept ultraviolet rays. Therefore, beer in a bottle of green glass must be stored with greater care than in the case of the amber glass. If this is not done there arises the problem that the beer soon deteriorates.

An example of the ordinary green glass commonly used for beer bottles is a glass having a composition comprising 72.2 % $SiO_2$, 12.7 % $Na_2O$, 10.8 % $CaO$, 1.94 % $Al_2O_3$, 1.34 % $K_2O$, 0.13 % $Cr_2O_3$, 0.15 % $Fe_2O_3$, the percentages being by weight, and unavoidable impurities, and having a brightness (Y) of 33.8 %, a dominant wavelength ($\lambda d$) of 558.7 nm and an excitation purity (Pe) of 68.3 %. This ordinary green glass intercepts light of 400 nm, but transmits a substantial proportion of light of 400 to 460 nm, as is evident from the percent transmission shown in Fig. 1, Curve D.

In the production of such an ultraviolet light intercepting green glass, furthermore, there are various problems due to the necessity of maintaining hexavalent chromium in the glass. That is, since an oxidant such as sodium nitrate is used in a proportion of more than 1 part by weight to 100 parts by weight of silica sand in the glass composition, (1) seeds or small bubbles tend to occur in the glass, (2) the production cost is increased because of the necessity to raise the temperature of the melting furnace or decrease the production quantity of the melting furnace so as to control the occurrence of seeds and (3) nitrogen oxides (NOx) are formed through decomposition of the sodium nitrate. Since the operation is carried out by feeding a larger amount of air to secure a higher degree of oxidation than in the case of the ordinary transparent or coloured glass, (1) the energy consumption is consequently increased and the production cost is increased and (2) the quantity of nitrogen oxides is increased, resulting in the problem of environmental pollution.

It is an object of the present invention to provide an improved green glass of soda-lime-silica type, for a container, which gives adequate light protection.

It is another object of the present invention to provide a green glass composition capable of intercepting or absorbing ultraviolet rays and near violet visible rays and suitable for the production of containers used for packaging food or beverages.

It is a further object of the present invention to provide a beer bottle made from a green glass free from seeds or small bubbles and capable of protecting beer from sunflavour.

It is a still further object of the present invention to provide a process for the production of an improved green glass of soda-lime-silica type, whereby the disadvantages of the prior art can be overcome.

These objects can be attained by a green glass for a container containing 0.3 to 1.5 % by weight of chromium oxide in terms of $Cr_2O_3$ and at most 0.06 % by weight of $Fe_2O_3$ in a glass composition of $SiO_2$-$Na_2O$-$CaO$ type and having C.I.E. colorimetric values for 10 mm thickness: a brightness (Y) of 1.02 % to 25 %, a dominant wavelength ($\lambda d$) of 556 to 564 nm and an excitation purity (Pe) of at least 90 %, which is capable of intercepting substantially a light of 340 to 460 nm in a thickness of 5 mm.

The accompanying drawings illustrate the principle and merits of the present invention in greater detail.

Fig. 1 and Fig. 2 are respectively graphs showing the percent transmissions of light in the ultraviolet region and near ultraviolet visible region as to green glasses of Example 1 to Example 3 according to the present invention, and amber glass and green glass of the prior art, each having a thickness of 4 mm, except Curve F (1 mm) (Fig. 1) and 2 mm (Fig. 2).

The inventors have made various efforts to develop a green glass for a container capable of preventing photochemical deterioration of the contents, in particular, protecting beer from so-called sunflavour and have succeeded in obtaining such a green glass by the use of a silica sand for transparent glasses, which has a smaller $Fe_2O_3$ content.

According to the present invention there is provided a green glass for a container containing 0.3 to 1.5 % by weight, preferably 0.35 to 1.5 % by weight, in particular, 0.35 to 0.5 % by weight of chromium oxide in terms of $Cr_2O_3$ and at most 0.06 % by weight of $Fe_2O_3$ in a glass composition of $SiO_2$-$Na_2O$-$CaO$ type, having C.I.E. colorimetric values for 10 mm thickness: a brightness (Y) of 1.02 % to 25 %, a dominant wavelength (λd) of 556 to 564 nm and an excitation purity (Pe) of at least 90 % and being capable of substantially intercepting light of 340 to 460 nm in a thickness of 4 mm, and a process for the production of the above described green glass, which process comprises preparing and melting a batch composition comprising 100 parts by weight of silica sand, 24 to 40 parts by weight of soda ash, 20 to 30 parts by weight of limestone, 0.5 to 3.0 parts by weight of sodium sulfate, 0.8 to 4.0 parts by weight of a bichromate, 0 to 3 parts by weight, preferably 0 to 1 part by weight of a nitrate and unavoidable impurities.

Generally, the glass composition of $SiO_2$-$Na_2O$-$CaO$ type used in the green glass of the present invention comprises 60 to 75 % by weight of $SiO_2$, 10 to 16 % by weight of $Na_2O$, 8 to 12 % by weight of $CaO$, 0.5 to 6 % by weight of $Al_2O_3$, 0 to 5 % by weight of $K_2O$ and unavoidable impurities.

In the green glass composition of the present invention, chromium oxide is added in a proportion of 0.3 to 1.5 % by weight, preferably 0.35 to 1.5 % by weight in terms of $Cr_2O_3$, for example, by the use of a bichromate such as potassium bichromate, and the iron content is adjusted to 0.06 % or less as $Fe_2O_3$. The thus-added chromium is preferably retained in the hexavalent chromium state as much as possible. The iron components unavoidably come from the silica sand and limestone and are added to the glass composition. When using the ordinary silica sand and limestone for coloured glasses, the content of $Fe_2O_3$ is about 0.15 to 0.2 % by weight, whereas in the present invention, a silica sand for transparent glasses, containing a smaller amount of $Fe_2O_3$ is particularly used to adjust the iron content to that described above.

In the green glass of the present invention, no colouring constituents other than chromium oxides, for example, metal oxides such as $CuO$, $Co_3O_4$, $NiO$, $As_2O_5$, $Fe_2O_3$, $MnO$, $CeO_2$ and $Sb_2O_3$ are added. When these metal oxides are added, transmission of heat rays is lowered, resulting in deterioration of the melting and forming properties, and $Cr^{6+}$ is converted into $Cr^{3+}$ so that interception of light near 450 nm is insufficient.

The amount of an oxidant such as sodium nitrate is generally 0, but, if necessary, the oxidant can be added in a proportion of less than 1 part by weight to 100 parts by weight of silica sand. Even if the operation is carried out under the ordinary conditions except using the oxidant in such a smaller proportion, including 0, a glass capable of substantially intercepting light of 340 to 460 nm can be obtained.

In the glass compositions of the present invention, chromium oxides are contained in a proportion of 0.3 to 1.5 % by weight, preferably 0.35 to 1.5 % by weight, because the green colour is enhanced in order to intercept light of 400 to 460 nm by increasing the content thereof to more than that of the prior art green glass. If less than 0.3 % by weight, in particular, 0.35 % by weight, of chromium oxides is included the interception of light of 400 to 460 nm is sufficient, as shown by the percent transmission curve of Comparative Example 1 in Fig. 1, while if more than 1.5 % by weight of chromium oxides is included the brightness of the glass is excessively lowered. When 1.5 % by weight of chromium oxides are contained in the glass composition, a light protection effect can be given even in the case of a thickness of 1 mm, which effect is substantially similar to the case of adding 0.35 % by weight of $Cr_2O_3$ for a thickness of 4 mm.

If the amount of iron oxides exceeds 0.06 % by weight as $Fe_2O_3$, $Cr^{6+}$ is converted into $Cr^{3+}$ depending on the amount of the excess and the interception of light near 450 nm will probably be insufficient. Since it is assumed that hexavalent chromium has a large influence upon the interception of light of near 450 nm, as described above, $Cr^{6+}$ is fed in the form of a bichromate and the content of $Fe_2O_3$ is controlled so as to be reduced and metal oxides such as $CuO$ are not added to secure the hexavalent chromium state. Furthermore, the melting and forming properties of the glass are deteriorated depending on the increment of $Fe_2O_3$. On the other hand, the amount of an oxidant can largely be decreased by decreasing the content of $Fe_2O_3$ to a greater extent as compared with the coloured glass of the prior art, namely from 0.15-0.2 % by weight to less than 0.06 % by weight, thereby obtaining a melt which is excellent in fining and a seed-free glass.

According to the present invention, the following advantages can be obtained.:

(1) The content of $Cr_2O_3$ is increased to thicken the green colour thereby completely intercepting near ultraviolet visible rays of near 400 to 460 nm and preventing occurrence of the so-called sunflavour.

(2) The amount of oxidant can be decreased, resulting in a melt excellent in fining, and a green glass free from seeds can thus be produced by largely decreasing the content of $Fe_2O_3$.

(3) Production of a green glass can be carried out without lowering the percent transmission of heat rays, deteriorating the melting and molding properties of the glass and lowering the production speed by decreasing the content of $Fe_2O_3$ and excluding addition of metal oxides such as copper oxide.

(4) In the case of a thickness of 2 mm, the percent transmission of the glass according to the present invention in the wavelength region of ultraviolet to 460 nm is smaller than that of amber glasses of the prior art. Therefore, the glass of the present invention can be widely applied to containers or bottles capable of protecting the contents such as food and beverages.

(5) In a situation requiring lightweight containers, the glass composition of the present invention will be more favourably applied. Even in the case of a thickness of 1 mm, increase of the quantity of $Cr_2O_3$ to 1.5 % by weight results in benefits comparable to those in the case of a thickness of 4 mm ($Cr_2O_3$ 0.35%).

(6) Since the use of excessive air and sodium nitrate is controlled according to the present invention and the quantity of NOx generated in the process can be largely decreased, the problem of environmental pollution can be alleviated.

The following examples are given in order to illustrate the present invention in detail, and in which parts and percents are to be taken as those by weight unless otherwise indicated.

## Example 1

To 100 parts of silica sand containing 0.04 % of $Fe_2O_3$ were added 28.8. parts of soda ash, 24 parts of limestone containing 0.025 % of $Fe_2O_3$, 1.0 part of sodium sulfate and 1.2 parts of potassium bichromate and the resulting mixture was melted to prepare a green glass having a composition of 72.1 % $SiO_2$, 13.6 % $Na_2O$, 10.2 % $CaO$, 1.8 % $Al_2O_3$, 1.5 % $K_2O$, 0.46 % $Cr_2O_3$, 0.04 % $Fe_2O_3$ and trace unavoidable impurities. This glass had C.I.E. colorimetric values consisting of the following for a typical 10 mm specimen: a brightness (Y) of 16.6 %, dominant wavelength ($\lambda$d) of 560.4 nm and excitation purity (Pe) of 97.8 % and had a percent photo-transmission as shown in Fig. 1 in the case of a thickness of 4 mm (Curve A). It will clearly be understood from the results that the above described green glass is more suitable for a beer bottle since the percent transmission in the case of a thickness of 4 mm corresponding to the thickness of a beer bottle is zero for light of 400 and 460 nm which is strongly related to sunflavour in beer, in comparison with other comparative glasses, Curves D and E in Fig. 1.

A glass bottle with a volume of 350 ml, weight of 240 g and side wall thickness of 2.5 mm was made from the above described green glass composition and an emerald green bottle with the same dimensions corresponding to an ultra-violet ray intercepting green glass shown in Fig. 1, Curve D, was used for comparison. Both the bottles were filled with beer and then subjected to a sensing test in which periods of time were measured until their sunflavours reached a same level. The green glass bottle of the present invention showed a period of time of 3.9 times as long as the comparative bottle.

## Example 2

The mixing and melting procedure of Example 1 was repeated except that the quantity of the potassium bichromate was decreased to 0.9 part, thus obtaining a green glass with a composition comprising 72.1 % $SiO_2$, 13.6 % $Na_2O$, 10.2 % $CaO$, 1.8 % $Al_2O_3$, 1.5 % $K_2O$, 0.35 % $Cr_2O_3$, 0.06 % $Fe_2O_3$ and trace unavoidable impurities. The thus resulting glass had C.I.E. colorimetric values as follows for a typical 10 mm specimen: a brightness (Y) of 23.9 %, a dominant wavelength ($\lambda$d) of 561.7 nm, and an excitation purity (Pe) of 96.2 % and a percent photo-transmission as shown in Fig. 1 in the case of a thickness of 4 mm (Curve B). Similarly, this green glass is suitable for a beer bottle.

The green glasses of Examples 1 and 2 each having a thickness of 2 mm showed percent photo-transmissions shown in Fig. 2, Curves A and B, which were favourably compared with an amber glass, Curve C, and the emerald green glass, Curve D, for light of 400 to 460 nm.

## Comparative Example 1

The procedure of Example 1 was repeated except using 0.6 part of potassium bichromate and additionally using 3.0 parts of sodium nitrate, thus obtaining a glass having a composition as shown in Table 1. The percent transmission of the glass of Comparative Example 1 is shown in Fig. 1, Curve E.

## Example 3

The procedure of Example 1 was repeated except for increasing the quantity of the potassium bichromate in the raw materials used in Example 1 to 3.9 parts, thus obtaining a glass with a composition of 72.1 % $SiO_2$, 13.6 % $Na_2O$, 10.2 % $CaO$, 1.8 % $Al_2O_3$, 1.5 % $K_2O$, 1.5 % $Cr_2O_3$, 0.04 % $Fe_2O_3$ and trace unavoidable impurities. This glass had C.I.E. colorimetric values as follows for a 1 mm specimen: a brightness (Y) of 49.1 % (corresponding to a calculated value of 1.02 % for a sample thickness of 10 mm), dominant wavelength ($\lambda$d) of 565.0 nm and excitation purity (Pe) of 88.0 %, and had a percent transmission at a thickness of 1 mm, as shown in Fig. 1, Curve F.

EP 0 259 132 B1

## Table 1
### (Parts by Weight)

| | Example 1 | Example 2 | Example 3 | Comparative Example 1 |
|---|---|---|---|---|
| **Raw Material Composition** | | | | |
| Silica sand [1] | 100 | 100 | 100 | 100 |
| Soda ash | 28.8 | 28.8 | 28.8 | 28.8 |
| Limestone | 24.0 | 24.0 | 24.0 | 24.0 |
| Sodium Sulfate | 1.0 | 1.0 | 1.0 | 1.0 |
| Potassium bichromate | 1.2 | 0.9 | 3.9 | 0.6 |
| Sodium Nitrate | 0 | 0 | 0 | 3.0 |
| **Glass Composition** | | | | |
| $Cr_2O_3$ | 0.46 | 0.36 | 1.5 | 0.23 |
| $Fe_2O_3$ | 0.04 | 0.06 | 0.04 | 0.04 |
| **Furnace Condition** | normal [2] | normal | normal | normal |

Note: 1) Silica sand for transparent glass
2) "Normal" indicates that the ratio of fuel and combustion air used in a melting furnace (air-fuel ratio) is in the optimum condition in which the $O_2$ concentration in the exhaust gas is 0.5 to 3 %.

## Claims

1. A green glass for a container containing 0.3 to 1.5 % by weight of chromium oxide in terms of $Cr_2O_3$ and at most 0.06 % by weight of $Fe_2O_3$ in a glass composition of $SiO-Na_2O-CaO$ type and having C.I.E. colorimetric values for 10 mm thickness: a brightness (Y) of 1.02 % to 25 %, a dominant wavelength ($\lambda$d) of 556 to 564 nm and an excitation purity (Pe) of at least 90 %, which is capable of intercepting substantially light of 340 to 460 nm in a thickness of 4 mm.

2. A process for the production of the green glass as claimed in Claim 1, which process comprises preparing and melting a batch composition comprising 100 parts by weight of silica sand, 24 to 40 parts by weight of soda ash, 20 to 30 parts by weight of limestone, 0.5 to 3 parts by weight of sodium sulfate, 0.8 to 4 parts by weight of a bichromate, 0 to 3 parts by weight of a nitrate and unavoidable

5

impurities.

3. A process as claimed in Claim 2, wherein the silica sand is one for transparent glasses, containing at most 0.06 % by weight of Fe₂O₃.

4. A process as claimed in Claim 2 or Claim 3, wherein the batch composition does not contain metal oxides other than chromium oxides.

5. A process as claimed in Claim 4, wherein the metal oxides are CuO, Co₃O₄, NiO, As₂O₅, Fe₂O₃, MnO, CeO₂ and Sb₂O₃.

6. A container such as a beer bottle whenever comprising a green glass as claimed in Claim 1.

**Revendications**

1. Verre de couleur verte pour un récipient contenant de 0,3 à 1,5 % en poids d'oxyde de chrome, compté en Cr₂O₃, et, au plus, 0,06 % en poids de Fe₂O₃ dans une composition de verre du type SiO-Na₂O-CaO et ayant les valeurs colorimétriques C.I.E. suivantes pour une épaisseur de 10 mm : une luminance (Y) de 1,02 % à 25 %, une longueur d'onde dominante (λd) de 556 à 564 nm et une pureté d'excitation (Pe) d'au moins 90 % qui est capable d'intercepter sensiblement une lumière de 340 à 460 nm dans une épaisseur de 4 mm.

2. Procédé de fabrication du verre de couleur verte selon la revendication 1, lequel procédé consiste à préparer et à faire fondre une composition comprenant 100 parties en poids de sable silicieux, 24 à 40 parties en poids de cendre de soude, 20 à 30 parties en poids de calcaire, 0,5 à 3 parties en poids de sulfate de sodium, 0,8 à 4 parties en poids d'un bichromate, 0 à 3 parties en poids d'un nitrate et des impuretés inévitables.

3. Procédé selon la revendication 2, dans lequel le sable silicieux est un sable pour verres transparents, contenant, au plus, 0,06 % en poids de Fe₂O₃.

4. Procédé selon la revendication 2 ou 3, dans lequel la composition ne contient pas d'oxydes de métal autres que des oxydes de chrome.

5. Procédé selon la revendication 4, dans lequel les oxydes de métaux sont les suivants : CuO, Co₃O₄ NiO, As₂O₅, Fe₂O₃, MnO, CeO₂ et Sb₂O₃.

6. Récipient tel qu'une bouteille de bière comprenant un verre de couleur verte selon la revendication 1.

**Patentansprüche**

1. Grünes Glas für einen Behälter, welches 0,3 bis 1,5 Gew.-% Chromoxid, angegeben als Cr₂O₃, und höchstens 0,06 Gew.-% Fe₂O₃ in einer Glaszusammensetzung des Types SiO-Na₂O-CaO enthält und folgende colorimetrischen C.I.E.-Werte für eine Dicke von 10 mm aufweist: Eine Helligkeit (Y) von 1,02 % bis 25 %; eine dominierende Wellenlänge (λd) von 556 bis 564 nm und einen spektralen Farbanteil (Pe) von wenigstens 90 %, welcher in der Lage ist, im wesentlichen Licht von 340 bis 460 nm in einer Schichtdicke von 4 mm abzufangen.

2. Verfahren zur Herstellung des grünen Glases nach Anspruch 1, welches die Herstellung und das Schmelzen einer Beschickungs-Zusammensetzung umfaßt, die 100 Gewichtsteile Siliciumdioxid-Sand, 24 bis 40 Gewichtsteile Sodaasche, 20 bis 30 Gewichtsteile Kalkstein, 0,5 bis 3 Gewichtsteile Natriumsulfat, 0,8 bis 4 Gewichtsteile eines Bichromats, 0 bis 3 Gewichtsteile eines Nitrats und nichtvermeidbare Verunreinigungen umfaßt.

3. Verfahren nach Anspruch 2, worin der Siliciumdioxid-Sand ein Sand für transparente Gläser ist, der höchstens 0,06 Gew.-% Fe₂O₃ enthält.

4. Verfahren nach Anspruch 2 oder Anspruch 3, worin die Beschickungs-Zusammensetzung keine anderen Metalloxide als Chromoxide enthält.

5. Verfahren nach Anspruch 4, worin die Metalloxide CuO, $Co_3O_4$, NiO, $As_2O_5$, $Fe_2O_3$, MnO, $CeO_2$ und $Sb_2O_3$ sind.

6. Behälter wie beispielsweise eine Bierflasche, wenn immer er ein grünes Glas umfaßt, wie es in Anspruch 1 beansprucht ist.

EP 0 259 132 B1

**FIG. 1**

FIG. 2

EP 0 259 132 B1